**Europäisches Patentamt**

**European Patent Office**

**Office européen des brevets**

(19)

(11) Veröffentlichungsnummer : **0 234 504 B1**

(12) # EUROPÄISCHE PATENTSCHRIFT

(45) Veröffentlichungstag der Patentschrift :
**19.06.91 Patentblatt 91/25**

(51) Int. Cl.$^5$ : **C09K 17/00, C04B 28/26**

(21) Anmeldenummer : **87102361.0**

(22) Anmeldetag : **19.02.87**

(54) Dichtmasse für Bodenabdichtungen.

(30) Priorität : **27.02.86 DE 3606313**

(43) Veröffentlichungstag der Anmeldung :
**02.09.87 Patentblatt 87/36**

(45) Bekanntmachung des Hinweises auf die
Patenterteilung :
**19.06.91 Patentblatt 91/25**

(84) Benannte Vertragsstaaten :
**AT BE CH DE FR GB IT LI NL SE**

(56) Entgegenhaltungen :
**EP-A- 0 082 971
DE-A- 3 326 836
DE-A- 3 329 403**

(73) Patentinhaber : **HÜLS
AKTIENGESELLSCHAFT
Paul-Baumann-Strasse 1
W-4370 Marl 1 (DE)**

(72) Erfinder : **Burkhardt, Rudolf, Dr.
Im Hahn 1
W-5461 Vettelschoss 2 (DE)**
Erfinder : **Hass, Hansjürgen, Dr.
Telegrafstrasse 27
W-5210 Troisdorf (DE)**
Erfinder : **Hitze, Reiner, Dr.
Hyazinthenfeld 1
W-5210 Troisdorf (DE)**
Erfinder : **Zoche, Günter, Dr.
Königsheimstrasse 13
W-5300 Bonn 3 (DE)**

## Beschreibung

Gegenstand der vorliegenden Erfindung sind Dichtmassen aus Tonmineralien, Füllstoffen, Bindemitteln und Wasser, mit denen durchlässige Böden, z.B. Sandböden, abgedichtet werden können. Die erfindungsgemäßen Dichtmassen können mit bekannten bautechnischen Verfahren in Form von vertikalen Dichtwänden, horizontalen Sperrschichten, z.B. Dichtungssohlen, Deponieauskleidungen, Deponieabdeckungen usw., in den Boden eingebracht werden. Hauptanwendungszweck dieser Dichtmassen ist es, das Ausbreiten von Bodenkontaminationen und besonders das Eindringen von Schadstoffen in das Grundwasser zu verhindern. Die Schadstoffimmobilisierung kann ggf. durch Verfüllen von Deponiehohlräumen mit der Dichtungsmasse verbessert werden.

Es ist bereits bekannt, Dichtwände gegen die Ausbreitung von Schadstoffen, z.B. von Deponiesickerwässern usw., einzusetzen. Man verwendet hauptsächlich zwei nach unterschiedlichen Verfahren und mit unterschiedlichen Dichtwandmassen hergestellte Schlitzwände :

### 1. Einphasenschlitzwand

Masse enthält etwa 2 bis 4 Gew.-% Natriumbentonit, 12,5 bis 20 Gew.-% Zement, 75 bis 85 Gew.-% Wasser ;

### 2. Zweiphasenschlitzwand (Backfill-Methode)

Masse enthält ca. 0,2 bis 2 Gew.-% Natriumbentonit, 60 bis 75 Gew.-% Boden (Schlitzaushub), 25 bis 35 Gew.-% Wasser.

Die Nachteile der Einphasenmasse liegen infolge ihres niedrigen Feststoffgehalts (15 bis 25 Gew.-%) in der relativ hohen Durchlässigkeit, k (für Wasser) $10^{-7}$ bis $10^{-8}$ m/s und der Erosionsgefahr. Ein lang anhaltender, ausreichender Schutz des Grundwassers ist besonders dann zweifelhaft, wenn die beiden gegen Chemikalien empfindlichen Bestandteile Zement und Bentonit durch Schadstoffe belastet werden.

Die Zweiphasenmasse besitzt zwar einen höheren Feststoffgehalt und einen niedrigeren Durchlässigkeitsbeiwert, k ca. $10^{-9}$ m/s, dieser kann jedoch bei längeren Wandabschnitten deutlich schwanken, wenn größere Unterschiede in der Zusammensetzung des ausgehobenen und zurückgefüllten Bodenmaterials auftreten. Da diese Masse keinen Zement und auch kein anderes Bindemittel enthält, bleibt sie auf Dauer weich. An Stellen, an denen die Wand an gröberes Lockergestein, z.B. Kies, angrenzt, besteht Erosionsgefahr. Die Schadstoffbeständigkeit dieser Massen läßt sich wegen der von Fall zu Fall schwankenden Zusammensetzung nicht voraussagen und muß durch langdauernde Prüfungen ermittelt werden.

Aus der DE-A-3 326 836 war weiter bekannt, Trialkoxysilane zusammen mit Alkalialuminaten in Massen zu verwenden, in welchen durch hydraulische Bindemittel wie Zement die Festigkeit und Durchlässigkeit maßgeblich bestimmt wird.

Da gerade von Abdichtungen gegen Schadstoffe größte Zuverlässigkeit erwartet wird, bestand die Aufgabe, eine Dichtmasse zu entwickeln, die die obengenannten Nachteile nicht aufweist und sich in einfacher Weise mit üblichem Baugerät herstellen und verarbeiten läßt.

In Erfüllung dieser Aufgabe wurden nun Dichtmassen für Bodenabdichtungen gefunden, die aus Tonmineralien, Füllstoffen, Bindemitteln und Wasser bestehen und die im kennzeichnenden Teil des Anspruchs 1 angegebene Zusammensetzung besitzen.

Die in den Massen enthaltenen Tonmineralien sind Silikate mit Schichtgitterstruktur, bevorzugt solche mit geringem Quellvermögen und Austauscherkapazität, z.B. Kaolinit und Illit. Ihr Anteil am Gesamtfeststoff beträgt 5 bis 90 Gew.-%, der Rest der Feststoffe sind silikatische Füllstoffe, die weitgehend carbonatfrei sein sollen, um im Kontakt mit sauren Schadstoffen kein $CO_2$-Gas zu entwickeln. Unter silikatischen Füllstoffen sind feinteiliges Silikat- und Quarzgestein in Korngrößen von 1 μm bis 20 mm zu verstehen, wobei als Silikatgestein z.B. Schiefer, Granit und Basalt in Frage kommen. Der Ausdruck "weitgehend carbonatfrei" soll bedeuten, daß beim Einsatz von natürlichen Gesteinen diese einen Carbonatgehalt < 0,5 Gew.-% enthalten sollen.

Als Bindemittel wird ein Gemisch aus wäßriger Alkaliwasserglaslösung, vorzugsweise handelsüblicher Natronwasserglaslösung oder deren Verdünnungen auf $SiO_2$–.

Gehalte unter 25 Gew.-% und Viskositäten unter 1000 mPa · s (293 K), und einem Trialkoxysilan der allgemeinen Formel R-Si(OR')$_3$ eingesetzt. In der Formel bedeutet R einen aliphatischen Rest mit 1 bis 6 C-Atomen, der durch reaktive Gruppen, z.B. Amino- oder Mercaptogruppen, substituiert sein kann, und R' gleiche oder verschiedene Alkylreste mit 1 bis 4 C-Atomen, Beispiele für solche Silane sind die Methyl-, Ethyl-, Propyl- und Isobutyl-trimethoxy- oder -triethoxysilane sowie γ-Mercaptopropgltrimethoxysilan. Der Anteil der Alkylalkoxysilane in dem Gemisch kann zwischen 0,1 und 20 Gew.-% schwanken, vorzugsweise liegt er zwischen 0,5 und 10 Gew.-%.

Die Dichtmasse kann zusätzlich ein saures Alkali-, Erdalkali oder Ammoniumphosphat und/oder Phosphorsäure enthalten. Mit diesen Zusätzen, die vorzugsweise dem Bindemittel zugemischt werden, können die Festigkeit und Beständigkeit der Dichtmassen beeinflußt werden.

Die Herstellung der erfindungsgemäßen Dichtmassen erfolgt durch Mischen der Bestandteile, wobei je nach Art des vorhandenen Mischers unterschiedlich verfahren werden kann. Bei Verwendung eines Rührwerkbehälters ist es z.B. vorteilhaft, das flüssige Bindemittelgemisch vorzulegen und die Feststoffe einzeln oder als Gemisch einzurühren. In Zwangsmischern (nach Art von Betonmischern) kann ein Teil oder die Gesamtmenge der Feststoffe vorgemischt und die flüssigen Bestandteile einzeln oder als Bindemittelgemisch zugemischt werden. Nähere Angaben über die Herstellung des Bindemittels und der Dichtmassen enthalten die Beispiele.

Bei der Herstellung der Dichtmassen bewirkt das Bindemittel zunächst eine Verflüssigung, die es ermöglicht, sehr hohe Feststoffanteile – bis über 90 Gew.-% – einzuarbeiten, ohne die Verarbeitbarkeit zu behindern. Der Beginn des Abbindens, der durch die Zusammensetzung des Bindemittels einer üblichen Verarbeitungszeit von z.B. 6 bis 24 Stunden angepaßt werden kann, läßt sich durch Bestimung der Scherfestigkeit bzw. Fließgrenze der Masse ermitteln. Das Abbinden der Massen führt zu einem plastisch-elastischen Zustand hoher Kohäsion, wobei die Druckfestigkeit auf ausreichende Werte ansteigt und die Erosionsgefahr stark zurückgeht.

Mit zunehmendem Feststoffgehalt nimmt unter sonst gleichen Bedingungen die Durchlässigkeit der Massen ab und ihre Chemikalienbeständigkeit zu. Aussagen darüber lassen sich u.a. aus den Ergebnissen längerer Durchlässigkeitsprüfungen ableiten. Wenn sich z.B. die Durchlässigkeit einer Masse für eine bestimmte zurückzuhaltende Flüssigkeit innerhalb eines halben oder ganzen Jahres nicht deutlich ändert, so kann man daraus schließen, daß die Flüssigkeit mit den Massebestandteilen weder chemisch reagiert noch deren Struktur physikalisch verändert.

Beispiel 1

In 27,9 g 10%ige Phosphorsäure gibt man unter Rühren 10,8 g 10% orige Natronlauge und anschließend 18 g Propyltrimethoxgsilan, das sich in 10 bis 15 Minuten klar löst. Diese Lösung rührt man in ein Gemisch aus 573,3 g Wasser und 120 g Natronwasserglas (Dichte = 1,26 g/cm³, Gewichtsverhältnis $SiO_2$ : $Na_2O$ = 3,85, $SiO_2$-Gehalt 22,3%) ein. Zu dieser Bindemittellösung gibt man unter kräftigem Rühren nacheinander innerhalb von 15 Minuten 562,5 g.

Tonmehl und 1687,5 g feinen Quarzsand (Korndurchmesser 0,06 bis 0,7 mm). Man erhält 3000 g der erfindungsgemäßen Masse A als leicht rührbares, fließfähiges Produkt mit einem Peststoffgehalt von 75 Gew.-%.

Mit 750 g Wasser anstelle daß Bindemittels entsteht mit den gleichen Feststoffen eine schwer rührbare, nicht abbindende Masse B. Scherfestigkeiten siehe Tabelle unter Beispiel 2.

Beispiel 2

In 17,7 g 10% orige Phosphorsäure werden 6,9 g 10%ige Natronlauge und anschließend 11,4 g Propyltrimethoxysilan eingerührt. Nachdem sich das Silan vollständig gelöst hat, wird die Lösung einem Gemisch aus 366 g Wasser und 78 g Natronwasserglas (Dichte = 1,26 g/cm³, Gewichtsverhältnis $SiO_2$ : $Na_2O$ = 3,85, $SiO_2$-Gehalt 22,3%) unter Rühren zugesetzt. In das so erhaltene Bindemittel werden nacheinander innerhalb von 15 Minuten unter kräftigem Rühren 630 g Tonmehl und 1890 g feiner Quarzsand eingerührt und 3000 g der erfindungsgemäßen Masse C erhalten, die trotz 84% Feststoff noch leicht beweglich ist.

Bei Verwendung von 480 g Wasser anstelle des Bindemittels wurde mit den gleichen Feststoffanteilen die Masse D erhalten, die sich nur schwer homogen durchmischen ließ.

Die anfangs verflüssigende Wirkung das spätere Abbinden des Bindemittels sind an den Scherfestigkeiten der Massen erkennbar :

| Masse | Scherfesitgkeit in N/m$^2$ nach | | | |
| --- | --- | --- | --- | --- |
| | 30 min | 3 h | 6 h | 24 h |
| A (erfindungsgemäß) | 10 | 15 | 90 | > 300000 |
| B (nicht erfindungsgem.) | 120 | 130 | 240 | 230 |
| C (erfindungsgemäß) | 190 | 120 | 111 | > 300000 |
| D (nicht erfindungsgem.) | 3000 | 3150 | 2400 | 2400 |

Beispiel 3

Durchlässigkeitsprüfungen einer erfindungsgemäßen Masse mit einem Feststoffgehalt von 83,3 Gew.-%.

Herstellung der Masse :

In einer Lösung von 1,86 g $H_3PO_4$ und 0,72 g NaOH in 27,42 g Wasser wurden unter Rühren 12 g Propyltrimethoxysilan gelöst und die so erhaltene Lösung in ein Gemisch aus 378 g Wasser und 80 g Natronwasserglas (Dichte = 1,26 g/cm$^3$, Gewichtsverhältnis $SiO_2$ : $Na_2O$ = 3,85) eingerührt. Diesem Bindemittel wurden innerhalb von 15 Minuten nacheinander 625 g Tonmehl und 1875 g feiner Quarzsand zugemischt.

Prüfung :

Die Masse wurde als Schicht von 10 cm Dicke und 10 cm Durchmesser in eine Meßzelle für einaxiale Prüfungen gefüllt, in der sie nach ca. 20 Stunden erstarrte. 48 Stunden nach Herstellung wurde die auf wassergesättigtem Sand stehende Probe von oben mit einer Prüfflüssigkeit belastet und die pro Tag eindringende bzw. austretende Flüssigkeitsmenge gemessen.

| Prüfflüssigkeit | hydraulischer Gradient I | Durchlässigkeitsbeiwert k [m/s] | | |
| --- | --- | --- | --- | --- |
| | | nach 10 Tagen | nach 50 Tagen | nach 100 Tagen |
| Wasser | 16,0 | $6 \cdot 10^{-11}$ | $7 \cdot 10^{-11}$ | $6 \cdot 10^{-11}$ |
| Triethanolamin, 5 % in Wasser | 16,2 | $6 \cdot 10^{-11}$ | $5 \cdot 10^{-11}$ | $6 \cdot 10^{-11}$ |
| Propionsäure, 5 % in Wasser | 15,8 | $7 \cdot 10^{-11}$ | $8 \cdot 10^{-11}$ | $8 \cdot 10^{-11}$ |
| Deponiesicker-wasser *) | 15,0 | $9 \cdot 10^{-11}$ | $2 \cdot 10^{-10}$ | $1 \cdot 10^{-10}$ |

*) Zusammensetzung: $NH_4Cl$ : 23,73 g/l; $Na_2SO_4$ : 5,92 g/l
NaCl : 138,90 g/l; $(NH_4)_2SO_4$ : 4,00 g/l
Phenol: 350 mg/l; Toluol : 10 mg/l
$CH_2Cl_2$: 50 mg/l; pH = 6

Beispiel 4

Durchlässigkeitsprüfung einer erfindungsgemäßen Masse mit einem Feststoffgehalt von 75 Gew.-%.

Herstellung der Masse :

In einer Lösung von 100 g Natronwasserglas (Dichte = 1,26 g/cm$^3$, Gewichtsverhältnis $SiO_2$ : $Na_2O$ = 3,85)

in 509,5 g Wasser werden 12 g Propyltrimethoxysilan und 3,5 g γ-Mercaptopropyltrimethoxysilan unter Rühren gelöst. Diesem Bindemittel werden nacheinander 950 g Tonmehl, 725 g Quarzmehl und 200 g feiner Quarzsand zugemischt.

Prüfung :

Die Masse wurde wie im Beispiel 3 beschrieben behandelt und geprüft.

| Prüfflüssigkeit | hydraulischer Gradient J | Durchlässigkeitsbeiwert K [m/s] | | |
|---|---|---|---|---|
| | | nach 10 Tagen | nach 50 Tagen | nach 100 Tagen |
| Wasser | 16,1 | $8 \cdot 10^{-11}$ | $8 \cdot 10^{-11}$ | $4 \cdot 10^{-11}$ |

## Ansprüche

1. Dichtmasse für Bodenabdichtungen aus Tonmineralien, Füllstoffen, Bindemitteln und Wasser, **dadurch gekennzeichnet**, daß sie

a) als Bindemittel ein Gemisch aus einer wäßrigen Alkaliwasserglaslösung und Trialkoxysilanen der allgemeinen Formel R-Si(OR')$_3$, in der R für einen aliphatischen Rest mit 1 bis 6 C-Atomen, der ggf. mit reaktiven Gruppen substituiert sein kann, und R' für gleiche oder verschiedene Alkylreste mit 1 bis 4 C-Atomen stehen, wobei der Anteil an Trialkoxysilan im Bindemittel 0,5 bis 10 Gew.-% beträgt, und

b) als Feststoffe ein Gemisch aus Tonmineralien und silikatischen Füllstoffen enthalten, wobei das Feststoffgemisch 50 bis 95 Gew.-% der Gesamtmasse und der Anteil an Tonmineralien 5 bis 90 Gew.-% des Feststoffgemischs beträgt.

2. Dichtmasse nach Anspruch 1, dadurch gekennzeichnet, daß in dem Bindemittel a) der Anteil an Alkaliwasserglaslösung einem SiO$_2$-Gehalt von 1 bis 25 Gew.-% entspricht.

3. Dichtmasse nach Ansprüchen 1 und 2, dadurch gekennzeichnet, daß sie zusätzlich ein saures Alkali-, Erdalkali- oder Ammoniumphosphat und/oder Phosphorsäure enthält.

## Claims

1. Sealing composition for sealing the soil and formed from clay minerals, fillers, binders and water, characterised in that they contain

a) as binder, a mixture of an aqueous alkali metal water-glass solution and trialkoxysilanes of the general formula R-Si(OR')$_3$, in which R stands for an aliphatic residue with 1 to 6 C-atoms, which can optionally be substituted by reactive groups, and R' stands for the same or different alkyl residues with 1 to 4 C-atoms, wherein the amount of trialkoxysilane in the binder amounts to 0.5 to 10-% by weight, and

b) as solids, a mixture of clay minerals and silicate fillers, wherein the solid mixture amounts to 50 to 95-% by weight of the total composition and the amount of clay minerals amounts to 5 to 90-% by weight of the mixture of solids.

2. Sealing composition according to claim 1, characterised in that the amount of alkali metal waterglass solution in the binder a) corresponds to a SiO$_2$ content of 1 to 25-% by weight.

3. Sealing composition according to claims 1 and 2, characterised in that it additionally contains an acid alkali metal, alkaline earth or ammonium phosphate and/or phosphoric acid.

## Revendications

1. Masse d'étanchéité, ou composition d'étanchement, pour des étanchements de sols, formée par des matières argileuses minérales, des charges, des liants et de l'eau, cette composition étant caractérisée en ce que :

a) elle contient comme liant un mélange d'une solution aqueuse de silicate alcalin et de trialcoxysilanes de formule générale R-Si(OR')$_3$, dans laquelle R représente un reste aliphatique ayant 1 à 6 atomes de

5

carbone, qui peut éventuellement être substitué par des groupes réactifs, et R' représente des restes alkyles, identiques ou différents, ayant 1 à 4 atomes de carbone, la proportion du trialcoxysilane dans le liant allant de 0,5 à 10% en poids, et

b) comme solides, un mélange de matières argileuses minérales et de charges silicatiques, le mélange des solides représentant 50 à 95% du poids de la composition totale et la proportion des matières argileuses minérales représentant 5 à 90% du poids du mélange des solides.

2. Composition d'étanchement selon la revendication 1, caractérisée en ce que, dans le liant (a), la proportion de la solution de silicate alcalin correspond à une teneur en $SiO_2$ de 1 à 25% en poids.

3. Composition d'étanchement selon les revendications 1 et 2, caractérisée en ce qu'elle contient en outre un phosphate acide alcalin, alcalino-terreux ou d'ammonium et/ou de l'acide phosphorique.